(19) **Europäisches Patentamt / European Patent Office / Office européen des brevets**

(11) **EP 1 935 987 A1**

(12) **EUROPEAN PATENT APPLICATION**

(43) Date of publication:
**25.06.2008 Bulletin 2008/26**

(51) Int Cl.:
*C12Q 1/68* (2006.01)  *G01N 21/64* (2006.01)

(21) Application number: **06026700.2**

(22) Date of filing: **22.12.2006**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK RS**

(71) Applicant: **Rigler, Rudolf**
**1025 St. Sulpice (CH)**

(72) Inventor: **The designation of the inventor has not yet been filed**

(74) Representative: **Weiss, Wolfgang et al**
**Weickmann & Weickmann**
**Patentanwälte**
**Postfach 86 08 20**
**81635 München (DE)**

(54) **Detection of gene expression in cells by scanning FCS**

(57) The present invention relates to a method for determination of an analyte in a cell by fluorescent correlation spectroscopy. Luminescent labels are attached to receptors, which may be nucleic acids. the receptors are capable of hybridising with an analyte, which may be a DNA or RNA molecule. According to the invention, the receptors are introduced into living cells to interact with the analytes.

This interaction is monitored by fluorescent correlation spectroscopy. The method of the invention may be used for direct gene expression analysis.

**EP 1 935 987 A1**

## Description

The present invention relates to a method for determination of an analyte in a cell by fluorescent correlation spectroscopy.

Fluorescence Correlation Spectroscopy (FCS) has become one of the most promising techniques for monitoring biological reactions on single molecule level. After its first discovery by Magde et al (1972) and Ehrenberg and Rigler (1974), FCS had been widely applied in both basic biological research and industrial practice, like drug development. FCS is based on statistics calculation of signal intensity fluctuation detected in a small confocal volume in a sample solution. FCS has many advantages. Concentration of target molecules is far below 1 copy per detection volume and required sample volume is extremely small. Characteristics of the fluorescent molecules can be detected and it allows multiple species detection. Measurements can be done in a homogenous solution and washing steps are not required.

For a series of ultra-sensitive biological applications as e. g. DNA hybridization or enzyme cleavage reactions, dual colour labelling is often required. Various conjugates within the same homogeneous sample are to be tagged with two different fluorescence dyes having their excitation and emission spectra in separated spectral ranges. In experiments like these two laser wavelengths are simultaneously applied for excitation. To quantify the amount of binding of the differently labelled conjugates to each other, signal processing methods of coincidence detection as fluorescence cross correlation (Rigler et al. 1998, Schwille et al. 1997) or 2D-FIDA (Kask et al. 2000) are applied.

In applications involving molecules with low mobility the normal FCS is not applicable. The immobility introduces photobleaching artifacts and also causes poor statistics in the analysis result. To overcome these disadvantages, scanning FCS, S-FCS, is applied. Berland et al. (1996) applied S-FCS to detect molecule aggregation. The laser beam is scanned periodically over the sample with a circular scanning path. An analytical model was proposed for the correlation functions. Amediek et al. (2002) applied S-FCS together with dual-colour cross-correlation to immobile molecules. The scanning was realized by moving the sample table: an xy-stage and cross-correlation is applied for the analysis.

Recently the direct gene expression analysis (DGA) in solution based on fluorescence correlation spectroscopy (FCS) was described by Korn et al., 2003, Nolan et al, 2003 and Camacho et al., 2004. The simultaneous gene-specific hybridization of two dye-labelled DNA probes to selected target molecules (either DNA or RNA) and the subsequent dual colour cross-correlation analysis of the hybridization products allow the quantification of the bio-molecule of interest in absolute numbers. As in every measurement one single gene target is analysed, each well (optimized for 1-10 $\mu$l sample volume) of a microtiterplate contains a hybridization sample comprised of biological sample solution and two differently labelled gene-specific DNA probes. The probes hybridize under controlled conditions to their target gene and the number of double-labelled molecules (encounter frequency in the detection volume element) is determined using dual colour fluorescence cross-correlation. The gene copies per $\mu$g biological sample is calculated from the linear regression of a simultaneous generated calibration curve (standard curve). In DGA, gene expression level is quantified without the need of enzymatic transcription or amplification steps. The disadvantages inherited in the gene expression analysis methods with enzymatic amplification are avoided, like the reproducibility and specificity.

However, the state of the art FCS methods require preparation of the samples. No recordings in cells, in particle in living cells, are possible. It is the object of the present invention to provide an improved FCS-based method suitable for intracellular recordings.

A subject matter of the present invention is thus a method for determination of an analyte in a cell by fluorescent correlation spectroscopy, comprising the steps

    (a) providing a cell,

    (b) contacting the cell of (a) with a combination of a first receptor, a second receptor and optionally at least one further receptor under conditions suitable for binding of the first receptor, the second receptor and the optional at least one further receptor to the analyte within the cell, wherein the first receptor, the second receptor and the optional at least one further receptor are capable of simultaneously binding to the analyte, and wherein the first receptor carries a first luminescent labelling group, the second receptor carries a second luminescent labelling group, and the optional at least one further receptor carries a further luminescent labelling group, and

    (c) determining the simultaneous presence of the first, the second, and the optional further at least one luminescent labelling group in a detection volume element within the cell by fluorescent correlation spectroscopy.

Step (c) may also comprise determination of the simultaneous presence of the first, the second, and the optional further at least one luminescent labelling group in a multiplicity of detection volume elements.

The method of the present invention may further comprise the step

    (d) determining the number of analyte particles in the detection volume element or/ and in the cell.

Step (d) may also comprise determination of the number of analyte particles in a multiplicity of detection volume elements.

In a multiplicity of detection volume elements, the number of particles determined in the individual detection volume elements may be added up.

When analyte particles are uniformly distributed in a cell, the number of analyte particles in a cell is proportional to the number of particles simultaneously carrying the first, the second, and the optional further at least one luminescent labelling group (multi-labelled particles) in a detection volume element or in a predetermined multiplicity of detection volume elements. In this case the number of analyte particles in a cell may be determined by extrapolation to the cell volume, which can be determined by its spatial extent.

The number of analyte particles in a cell may also be determined by scanning the regions of interest in the cell, e.g. individual compartments, such as the nucleus, or by scanning the complete cell.

The method of the present invention is particular suitable for direct gene analysis, in particular direct gene expression analysis.

The method of the present invention is particular suitable for quantitative determination of analytes, such as nucleic acids, in living cells.

The method of the present invention is particular suitable for determination of gene expression, such as determination of mRNA and protein expression. More preferred is quantitative determination of gene expression.

The method of the present invention, in particular suitable for determination of gene expression, preferably comprises RNA interference. The siRNA molecule may be employed as a receptor as described herein. Interaction of the siRNA and the RNA of interest, i.e. the analyte, may be mediated by Dicer or/and RISC. A siRNA molecule may for instance interact with and/or bind to the RNA transcribed from the gene of which the expression is to be determined, e.g. an mRNA.

EP 0679251 B1 describes principles of fluorescence correlation spectroscopy (FCS) of which use is also made in the method according to WO 02/097406 A1 and in the present invention. The disclosure of EP 0679251 B1 and WO 02/097406 concerning the FCS is included herein by reference. Fluorescence correlation spectroscopy is used to determine substance-specific parameters that are determined by luminance measurement at the analyte molecules. These parameters can be, for example, translation diffusion coefficients, rotation diffusion coefficients, reaction rates, the emission wavelength or/and the lifetime of an excited state of a luminescent molecule, or the combination of these measured parameters. In particular, fluorescence correlation spectroscopy can be used to investigate chemical and photophysical dynamic properties of individual molecules (see Rigler, R., Elson, E.S., "Fluorescence Correlation Spectroscopy, Theory and Applicatons", Springer-Verlag, Berlin Heidelberg, New York 2001).

In a standard application of fluorescence correlation spectroscopy, the intensity fluctuations in the fluorescent signals of the molecules excited by light are measured, and an autocorrelation of this signal is performed. A very good signal-to-noise ratio is achieved by providing the confocal detection volume in the region of a pinhole diaphragm, it being possible for the confocal detection volume to be extremely small.

By the FCS technique, the number of luminescent particles can be determined in a detection volume element of a size of smaller than $10^{-12}$ L, preferably of smaller than $10^{-13}$ L, more preferably of smaller than $10^{-14}$ L, most preferably of smaller than $10^{-15}$ L.

Thus, in the method of the present invention the detection volume element has a size smaller than $10^{-12}$ L, preferably smaller than $10^{-13}$ L, more preferably smaller than $10^{-14}$ L, most preferably smaller than $10^{-15}$ L.

The detection element is preferably a confocal volume element.

Fluorescence correlation spectroscopy may employ a laser for exciting the luminescent labelling groups in the sample.

In the method of the present invention, the fluorescent correlation spectroscopy is preferably scanning fluorescent correlation spectroscopy. Berland et al. (1996) and Amediek et al disclose scanning fluorescent correlation spectroscopy, the disclosure of which relating to scanning fluorescent correlation spectroscopy is included herein by reference.

Preferably, the fluorescent correlation spectroscopy as employed in the present invention comprises laser beam scanning. Laser beam scanning improves sensitivity and reduces photobleaching. As used herein, "laser beam scanning" refers to a movement of the laser beam relative to a sample comprising the cell, which cell may be a attached to a support. Thus, the detection volume element moves relative to the sample. It should be noted that the volume of a cell may be larger than the volume of the detection volume element. Laser beam scanning may thus access to the complete cell volume.

Laser beam scanning includes movement of the laser, movement of the sample, deflection or/and diffraction of the laser beam by an optical element, or a combination thereof, wherein the optical element may comprise at least one mirror or/and at least one lens. In particular, the optical element may comprise two mirrors. The mirror or/and the lens may be movable. The lens is preferably a rotating lens. Laser beam scanning may also be achieved by a Nipkow disk.

Laser beam scanning includes continuous scanning or/and discontinuous scanning. Continuous scanning includes continuous movement of the laser beam relative to a sample comprising the cell. Discontinuous scanning includes stepwise movement of the laser beam relative to the sample comprising the cell. Discontinuous scanning also includes scanning of a plurality of separated detection volume elements. Separation includes spatial separation. The number of separated detection volume elements may be at least 10, at least 50, at least 100, at least 1000, at least 10000, or/and at the maximum 20, at the maximum 100, at the maximum 200, at the maximum 2000, or at the maximum 20000. the position of the separated detection volume elements in the sample may be predetermined or stochastic. The separated detection volume elements may be scanned simultaneously or successively.

The scanning fluorescent correlation spectroscopy comprises circular scanning, spiraled scanning, zigzag scanning, linear scanning, random scanning or a combination thereof, which include continuous or/and discontinuous scanning. Circular scanning refers of a movement of the laser beam relative to the sample so that the movement of the detection volume element relative to the laser beam is essentially circular. Linear scanning refers of a movement of the laser beam relative to the sample so that the movement of the detection volume element relative to the laser beam is essentially linear. A combination of circular scanning and linear scanning includes an oval movement of the laser beam relative to the detection volume element (oval scanning). Random scanning refers to a movement of the laser beam relative to the sample which is a movement of the detection volume element relative to the laser beam of irregular shape and which preferably is not linear or circular, but may include elements of linear or/and circular scanning.

The movement of the laser beam relative to the detection volume element may be a periodical movement, i.e. the laser beam repeatedly scans an essentially predetermined trace in the sample. The periodical movement may include linear scanning, circular scanning, random scanning, or a combination thereof.

The person skilled in the art knows suitable techniques and suitable optical elements to provide a laser scanning as described herein.

Scanning fluorescent correlation spectroscopy as described herein may be employed for determination of the mobility of the analyte particles.

Continuous or discontinuous scanning may be employed. The mobility of the analyte can be reliably determined if the expected mobility is larger than the scanning speed or/and scanning rate for instance by a factor of at least 2, at least 5, at least 10, or at least 50.

In a preferred embodiment of the present invention, fluorescent correlation spectroscopy comprises cross correlation analysis of the emission signals of the first luminescent labelling group, the second luminescent labelling group, and the optional at least one further labelling group.

In another preferred embodiment of the present invention, fluorescent correlation spectroscopy comprises autocorrelation analysis of the emission signals of the first luminescent labelling group, the second luminescent labelling group, or/and the optional at least one further labelling group.

The person skilled in the art knows methods of correlation analysis which can be employed in the method of the present invention. Correlation analysis is described for instance by Aragon et al. (1976) and Amediek et al (2002), the disclosures of which on correlation analysis are included herein by reference.

The present method may be performed in high throughput format. In the method of the present invention, a plurality of samples may analysed in parallel or subsequently. At least 10 up to 200, at least 100 up 2,000, or at least 1,000 up to 20,000 samples may be analysed in parallel or subsequently. Further, in the method of the present invention, a plurality of cells may be analysed in a sample. At least 10 up to 200, at least 100 up 2,000, or at least 1,000 up to 20,000 cells may be analysed in parallel or subsequently.

The size of the volume element may depend upon the focus of the laser. Optical variation in the sample carrier or/and the cell may cause variation in the laser beam focus and may thereby cause variation in the size of the detection volume element. The variation of the detection volume element size may cause variation in the estimated number of particles within the volume element or in a predetermined multiplicity of detection volume elements.

The method of the present invention may comprise calibration of the detection volume element. The method of the present invention also may comprise calibration of the number of analyte particles.

The method of the present invention may comprise compensation of size variation of the detection volume element.

In a particular preferred embodiment, laser beam scanning is combined with calibration of the detection volume element, calibration of the number of analyte particles or/and compensation of size variation of the detection volume element. By this combination, an analyte in a cell attached to a support may be identified by scanning, and optical variations due to scanning of the interior of the cell can be calibrated or/and compensated, as described herein.

Calibration or/and compensation as used herein may comprise weighting the number of analyte particles in the volume element by the number of the first receptor molecules, the number of second receptor molecules, or/and the number of the molecules of the at least one further receptor in the volume element. The number of single receptor molecules present in a detection volume element or a multiplicity thereof represents the number of receptor molecules which are not bound to the analyte. It is preferred that the number of analyte particles is weighted by the number of one or two monolabelled particles (i.e. receptor molecules not bound to the analyte) selected from the first receptor molecules, the second receptor molecules, and the at least one further receptor molecules.

Calibration of the detection volume element or/and compensation of size variation of the detection volume element may be performed by calibration to the number of monolabelled particles (i.e. particles carrying the first fluorescent label, the second fluorescent label, or optionally the further fluorescent label) detected in the detection volume element or in a multiplicity of detection volume elements. The concentration of monolabelled particles can be considered constant. Thus, the number of monolabelled particles is proportional to the size of the detection volume element, and variation of the number of monolabelled particles in the detection volume element is proportional to variation of the size of the detection volume element.

The number of monolabelled particles in a detection volume element can be determined by autocorrelation analysis of the emission signals of the first luminescent labelling group, the second luminescent labelling group or/and the optional at least one further labelling group.

The number of multi-labelled particles may for instance be calibrated by:

$$N^*_{gr} = \frac{mean(\sqrt{N_g N_r})}{\sqrt{N_g N_r}} N_{gr}$$

$N^*_{gr}$      calibrated number multiple-labelled particles

$N_{gr}$      Number of multiple-labelled particles calculated with cross-correlation and autocorrelation

$N_g$      Number of particles labelled with a first fluorescent label estimated with autocorrelation

$N_r$      Number of particles labelled with a second fluorescent label estimated with autocorrelation

mean(.)      An operation for the mean value of all sample sites on a carrier. It is just a normalization factor, which may be omitted.

The square root of $N_r$ and $N_g$ may be used to estimate the size of the overlapped volume element. The compensation may be based on $N_r$ and $N_g$, which may be more reliable as the estimate of the multi-labelled particles, if their concentrations are higher than the concentration of the multi-labelled particles.

"Multiple-labelled particle" as used herein refers to an analyte particle to which the first receptor, the second receptor and the optional at least one further receptor is bound, which receptors carry a label, as described herein.

This formula may be modified accordingly, if the number of monolabelled particles carrying the first fluorescent label, or the number of monolabelled particles carrying the first, the second and the at least one further fluorescent label is employed for calibration.

The formula may be employed for calibration of the detection element volume, if $N_{gr}$ and $N^*_{gr}$ are replaced by V and V*, respectively, wherein V is the actual detection volume element, and V* is the calibrated detection volume element.

As indicated above, subject matter of the present invention is the determination of an analyte within a cell. The cell may be a eukaryotic cell, such as a mammalian cell, in particular a human cell. The cell may also be a prokaryotic cell, such as a bacterial cell, in particular a Gram negative cell, such as E. coli.

The cell may be a single cell, i.e. a cell separated from other cells. The cell may also be a cell located in a cell layer, a cell aggregation, a cell cluster, or a tissue. Preferred is a cell layer which may be a monolayer or a multilayer.

It is particularly preferred that the cell is a living cell. The cell may be a freshly isolated cell, or may be a cultured cell, such as a cell in a primary cell culture or a permanent cell line.

The analyte may be any molecule in a cell capable of simultaneously binding the first receptor, the second receptor and the optional at least one further receptor. In particular, the analyte may be any molecule in a cell capable of simultaneously binding the first receptor and the second receptor. The at least one further receptor may be a third receptor. Thus the analyte may in particular be any molecule in a cell capable of simultaneously binding the first receptor, the second receptor and the third receptor.

The analyte is preferably selected from biomolecules, more preferably selected from the group consisting of polypeptides, carbohydrates, lipids and nucleic acids. Most preferably, the analyte is a nucleic acid.

The analyte may be a DNA molecule to which the first, second and optional further receptor according to the invention can bind. The DNA molecule may have a length of at least 50 nucleotides, at least 100 nucleotides, or at least 200 nucleotides.

The analyte may be a gene product, such as RNA, a polypeptide or/and a protein encoded by the gene, wherein the RNA is in particular mRNA, tRNA, microRNA or rRNA. A preferred gene product is selected from mRNA, a polypeptide and a protein encoded by the gene. The polypeptide or protein may include a splice variant and may be posttranslationally modified or not. The RNA molecule may have a length of at least 50 nucleotides, at least 100 nucleotides, or at least 200 nucleotides. The polypeptide or protein may have a length of at least 50 amino acids, at least 100 amino acids, or at least 200 amino acids.

The analyte may be an enzyme. Examples of enzymes being suitable analytes are RNA turnover enzymes, such as DICER or RISC complex.

As used herein, the term "receptor" or "probe" refers to a molecule capable of binding the analyte. "Receptor" as employed herein includes the first, the second and the optional at least one further receptor, as described herein.

In a preferred embodiment, the combination of receptors comprises a first receptor and a second receptor. In another preferred embodiment, the combination of receptors comprises a first receptor, a second receptor, and at least one further receptor. The at least one further receptor may be a third receptor. It is thus more preferred that the combination of receptors comprises three receptors: a first receptor, a second receptor, and a third receptor.

The first receptor, the second receptor and the optionally the at least one further receptor may be any molecule capable of binding simultaneously to an analyte. The first receptor, the second receptor and optionally the at least one further receptor may independently be selected from the group consisting of polypeptides and nucleic acids.

The receptor being a polypeptide may be an antibody or an immunologically active fragment thereof. In particular, the antibody is directed against the analyte. The antibodies may be polyclonal antibodies or monoclonal antibodies, recombinant antibodies, e.g. single chain antibodies or fragments of such antibodies which contain at least one antigen-binding site, e.g. proteolytic antibody fragments such as Fab, Fab' or F(ab')$_2$ fragments or recombinant antibody fragments such as scFv fragments. The antibody may also be a chimeric antibody, a humanized antibody or a human antibody. The person skilled in the art knows methods suitable for producing such antibodies. An antibody fragment may have a length of 50 to 200 amino acid residues, or 100 to 500 amino acid residues.

The receptor being a nucleic acid may be DNA or RNA. The receptor may be a double stranded or single stranded nucleic acid molecule. A preferred double stranded RNA molecule is an siRNA molecule. The receptor may be an antisense nucleic acid.

The receptor nucleic acid may have a length of at least 5 up to 50 nucleotides, at least 10 up to 100 nucleotides, at least 50 up to 200 nucleotides, or at least 100 up to 1000 nucleotides. The receptor may also be an oligonucleotide. The receptor nucleic acid preferably has a length of at least 5 up to 50 nucleotides.

The nucleic acid being a receptor may comprise at least one sequence complementary to an analyte sequence, the analyte being a nucleic acid. The complementary sequence may have a length of at least 5 up to 50 nucleotides, at least 10 up to 100 nucleotides, at least 50 up to 200 nucleotides, at least 100 up to 500 nucleotides. Preferred is a range of at least 5 up to 50 nucleotides.

A preferred oligonucleotide, such as an siRNA molecule, may have a length of 11 to 29, preferably 15 to 25, more preferably 17 to 23, most preferably 21 nucleotides.

A double stranded nucleic acid receptor molecule of the present invention may comprise a single stranded overhang at one end or both ends, for instance of 1, 2, 3, 4 or even more nucleotides. The nucleic acid receptor molecule may also include modified nucleotides or/and nucleotide analogues known in the art. A DNA nucleic acid receptor molecule may comprise a ribonucleotide. An RNA nucleic acid receptor molecule may comprise a deoxyribonucleotide.

The receptor as described herein may be introduced into the cell by commonly known methods such as a gene gun, lipofection, liposomes, a precipitation agent (such as $CaPO_4$), or/and electroporation.

The first luminescent label, the second luminescent label, and the optional at least one further luminescent label may independently be selected from fluorescent and phosphorescent labelling groups. Any suitable luminescent group may be employed. Suitable fluorescent labelling groups include Rhodamine green, Bodipy630/650 and EVOblue50, and other known fluorescent groups employed for labelling of molecules.

It is preferred that the first luminescent label, the second luminescent label, and the optional at least one further luminescent label are different.

The first luminescent label, the second luminescent label, and the at least one further luminescent label may be excited at different wavelengths.

The first luminescent label, the second luminescent label, and the at least one further luminescent label my be excited at essentially the same wavelength.

In another embodiment, the first luminescent label, the second luminescent label, and the at least one further luminescent label are emitting at different wavelengths.

Background fluorescence of non-bound receptor molecules may be reduced by a quencher group capable of quenching the fluorescence of monolabelled particles (i.e. receptors not bound to the analyte). The quencher group may be provided on a molecule capable of binding the receptor if the receptor is not bound to the analyte. In this case, the quencher group quenches the fluorescence of the labelling group of the receptor.

Alternatively, the quencher group may be attached to the receptor molecules so that fluorescence or the labelling group is quenched if the receptor molecule is not bound to the analyte, and fluorescence is not quenched if the receptor in bound to the analyte. An example of such nucleic acid receptor molecule is a "molecular beacon". In a nucleic acid receptor molecule, the labelling group may be bound at the 3' end, and the quencher group may be bound at the 5' end, or vice versa.

Quenching as described above may reduce the fluorescence of monolabelled particles by about 10 to about 20%, by about 10 to about 30 %, or by about 10 to about 40 %.

Suitable quenching groups are known by a person skilled in the art. Suitable quenching groups are for instance described in Marras et al., 2002.

The method of the present invention may be used for quantitative determination of an analyte in a cell. An aspect of the present invention is thus a method for quantitative determination of an analyte in a cell, comprising performing steps (a), (b), (c) and (d) of the method for determination of an analyte in a cell by fluorescent correlation spectroscopy as described herein. The analyte may be any analyte as described herein.

The method of the present invention may be used for determination of the activity of an analyte. An aspect of the present invention is thus a method for determination of the activity of an analyte, comprising performing the method for determination of an analyte in a cell by fluorescent correlation spectroscopy as described herein, wherein the analyte exhibits activity in the cell. Examples of such analytes are nucleic acids, genes, enzymes, enzyme complexes such as Dicer and RISC, etc., wherein the active state of the analyte can be discriminated from the inactive state by simultaneously binding of the first, second and the optional at least one further receptor. The active analyte may bind the receptors simultaneously, whereas the inactive analyte may not bind the receptors simultaneously, or vice versa. In the context of the present invention, "activity" refers to any activity of an analyte in the cell, for instance the biological activity. "Activity" of a gene or/and gene product may include transcription, translation, posttranslational modification, splicing, modulation of the activity of the gene product by ligand binding, which ligand may be an activator or inhibitor, an enzymatic process or/and a degradation process, such RNA turnover by Dicer or/and RISC complex, etc.

The method of the present invention may be employed for determining nucleic acid hybridisation. An aspect of the present invention is thus a method for determination of nucleic acid hybridisation, comprising performing the method for determination of an analyte in a cell by fluorescent correlation spectroscopy as described herein, wherein the analyte is a DNA or RNA molecule, and the first, second and optional at least one further receptors are nucleic acids each comprising a sequence capable of hybridising with the analyte. In particular, the first, second and optional at least one further receptor each comprises a sequence complementary to the analyte sequence, wherein the analyte sequences complementary to the first, second and the optional at least one further receptor preferably do not overlap.

The method of the present invention may be used for direct gene analysis, in particular direct gene expression analysis. Another aspect of the present invention relates to a method for expression analysis of a predetermined target gene in a cell, comprising performing the method for determination of an analyte in a cell by fluorescent correlation spectroscopy as described herein, wherein the analyte is a predetermined target gene, or/and a gene product thereof, such as a target gene mRNA, a protein or a polypeptide encoded by the target gene.

It is preferred that the method of expression analysis is a quantitative expression analysis. "Quantitative" in this context means determination of the amount of gene product, such as RNA, protein, or/and polypeptide in a cell.

It is also preferred that the method of expression analysis is direct expression analysis, i.e. the expression analysis is performed without enzymatic amplification of the target gene or/and the gene product.

It is also preferred that in the method of expression analysis, the analyte is RNA, preferably selected from mRNA, tRNA and rRNA.

It is further preferred that the method of expression analysis is performed in an individual cell, in a cell located in a cell layer, in a cell aggregation, in a cell cluster, or in a tissue. In the method of expression analysis, the cell is preferably a living cell.

In the method of expression analysis, the first, the second, or/and the at least one further receptor is preferably a nucleic acid, in particular an oligonucleotide.

In the method of expression analysis of the present invention, expression of preferably a multiplicity of predetermined target genes is analysed. "Multiplicity" preferably refers to at least 10, at least 100, or at least 200 predetermined target genes, or/and at the maximum 2000, at the maximum 1000, or at the maximum 500 predetermined target genes.

## REFERENCES

A. Amediek, E. Haustien, D. Scherfeld, P. Schwille (2002), Scanning dual-color cross-correlation analysis for dynamic co-localization studies of immobile molecules, Signal Mol. 3 (2002) 54, 201-210

Aragon S. R., Pecora R. (1976) Fluorescence correlation spectroscopy as a probe of molecular dynamics. J. Chem Phys 64: 1791-1803

K. M. Berland, P. T. C. So, Y. Chen, W. Mantulin, E. Gratton (1996), Scanning two-photon fluctuation correlation spectroscopy: Particle counting measurements for detection of molecular aggregation. Biophys J 71 410-420

A. Camacho, K. Korn, M. Damond, J.-F. Cajot, E. Litborn, B. Liao, P. Thyberg, H. Winter, A. Honegger, P. Gardellin, R. Rigler, (2004) Direct Quantification of mRNA Expression Levels using Single Molecule Detection, Journal of Biotechnology 107,1076-114

P. Kask, K. Palo, N. Fay, L. Brand, Ü. Mets, D. Ullmann, J. Jungmann, J. Pschorr and K. Gall (2000), Two-dimensional fluorescence intensity distribution analysis: theory and applications, Biophys. J. 78, pp 1703-1713

K. Korn, P. Gardellin, B. Liao, M. Amacker, Å. Bergström, H. Björkman, A. Camacho, S. Dörhöfer, K. Dörre, J. Enström, T. Ericson, T. Favez, M. Gösch, A. Honegger, S. Jaccoud, M. Lapczyna, E. Litborn, P. Thyberg, H. Winter and R. Rigler (2003), Gene Expression Analysis using Single Molecule Detection, Nucleic Acids Res. 2003, 31 (16), e89

J. C. Lagarias, J. A. Reeds, M. H. Wright, and P. E. Wright (1998), "Convergence Properties of the Nelder-Mead Simplex Method in Low Dimensions," SIAM Journal of Optimization, Vol. 9 Number 1, pp. 112-147.

D. Magde, E. L. Elson, W. W. Webb (1972), Thermodynamic fluctuations in a reacting system-measurement by fluorescence correlation spectroscopy. Phys. Rev. Lett. 29: 704-708

R. L. Nolan, H. Cai, J. P. Nolan and P. M. Goodwin (2003), A simple quenching method for fluorescence background reduction and its application to the direct, quantitative detection of specific mRNA, Analytical Chemistry September 2003

R. Rigler, Z. Földes-Papp, F.-J. Meyer-Almes, C. Sammet, M. Völcker, A. Schnetz (1998), Fluorescence cross-correlation: A new concept for polymerase chain reaction, Journal of Biotechnology 97 109

P. Schwille, F. J. Meyer-Almes and R. Rigler (1997), Dual-color fluorescence cross-correlation spectroscopy for multicomponent diffusional analysis in solution. Biophys. J. 72: 1878-1886

Marras S. A. E.; Kramer, F.R.; Tyagi, S. Efficiencies of fluorescence resonance energy transfer and contact-mediated quenching in oligonucleotide probes. Nucleic Acids Research 2002, 30, e122.

**Claims**

1. Method for determination of an analyte in a cell by fluorescent correlation spectroscopy, comprising the steps

   (a) providing a cell,
   (b) contacting the cell of (a) with a combination of a first receptor, a second receptor and optionally at least one further receptor under conditions suitable for binding of the first receptor, the second receptor and the optional at least one further receptor to the analyte within the cell, wherein the first receptor, the second receptor and the optional at least one further receptor are capable of simultaneously binding to the analyte, and wherein the first receptor carries a first luminescent labelling group, the second receptor carries a second luminescent labelling group, and the optional at least one further receptor carries a further luminescent labelling group, and
   (c) determining the simultaneous presence of the first, the second, and the optional further at least one luminescent labelling group in a detection volume element within the cell by fluorescent correlation spectroscopy.

2. Method of claim 1, further comprising the step

   (d) determining the number of analyte particles in the detection volume element or/ and in the cell.

3. Method of claim 1 or 2, wherein the fluorescent correlation spectroscopy is scanning fluorescent correlation spectroscopy.

4. Method of claim 3, wherein the scanning fluorescent correlation spectroscopy comprises laser beam scanning.

5. Method of claim 4, wherein the scanning fluorescent correlation spectroscopy comprises continuous or/and discontinuous laser beam scanning.

6. Method of any of the claims 3 to 5, wherein the scanning fluorescent correlation spectroscopy comprises circular scanning, spiraled scanning, zigzag scanning, linear scanning, random scanning or a combination thereof.

7. Method of any of the preceding claims, wherein fluorescent correlation spectroscopy comprises cross correlation analysis of the emission signals of the first luminescent labelling group, the second luminescent labelling group, and the optional at least one further labelling group.

8. Method of any of the preceding claims comprising calibration of the detection volume element.

9. Method of any of the preceding claims comprising compensation of size variation of the detection volume element.

10. Method of claim 8 or 9, wherein calibration or/and compensation comprises weighting the number of analyte particles in the volume element by the number of the first receptor molecules, the number of second receptor molecules, or/and the number of the molecules of the at least one further receptor in the volume element.

11. Method of any of the claims 1 to 10, wherein the cell is a single cell, or wherein the cell is located in a cell layer, a cell aggregation, a cell cluster, or a tissue.

12. Method of any of the preceding claims wherein the cell is a living cell.

13. Method of any of the preceding claims wherein the analyte is selected from biomolecules, in selected particular from the group consisting of polypeptides, carbohydrates, lipids and nucleic acids.

**14.** Method of claim 13, wherein the analyte is a nucleic acid.

**15.** Method of any of the preceding claims, wherein the combination of receptors comprises a first receptor, a second receptor, and at least one further receptor.

**16.** Method of any of the preceding claims, wherein the first receptor, the second receptor and optionally the at least one further receptor is independently selected from the group consisting of polypeptides and nucleic acids.

**17.** Method of claim 16, wherein the polypeptide is an antibody or an immunologically active fragment thereof.

**18.** Method of claim 16, wherein the nucleic acid is an oligonucleotide.

**19.** Method of claim 17 or 18, wherein the nucleic acid is a siRNA molecule.

**20.** Method of any of the claims 1 to 19, wherein the receptor is introduced into the cell by a gene gun, lipofection, liposomes, a precipitation agent or/and electroporation.

**21.** Method of any of the claims 1 to 20, wherein the first luminescent label, the second luminescent label, and the at least one further luminescent label are excited at different wavelengths.

**22.** Method of any of the claims 1 to 20, wherein the first luminescent label, the second luminescent label, and the at least one further luminescent label are excited at essentially the same wavelength.

**23.** Method of any of the preceding claims, wherein the first luminescent label, the second luminescent label, or/and the at least one further luminescent label are emitting at different wavelengths.

**24.** Method of any of the preceding claims, wherein the luminescent label is a fluorescent label.

**25.** Method of any of the preceding claims, wherein the detection volume element is smaller than $10^{-12}$ L.

**26.** Method of any of the preceding claims, wherein the detection volume element is a confocal volume element.

**27.** Method for expression analysis of a predetermined target gene in a cell comprising performing the method as claimed in any of the claims 1 to 26, wherein the analyte is the target gene, or/and a gene product thereof, such as a target gene mRNA.

**28.** Method of claim 27, which is a quantitative expression analysis.

**29.** Method of claims 27 or 28, which is performed without enzymatic amplification of the target gene or/and the gene product.

**30.** Method of any of the claims 27 to 29, wherein the analyte is RNA.

**31.** Method of claim 30, wherein the RNA is selected from mRNA, tRNA, micro-RNA and rRNA.

**32.** Method of any of the claims 27 to 31, which is performed in an individual cell or in a cell located in a cell layer, in a cell aggregation, in a cell cluster, or in a tissue.

**33.** Method of any of the claims 27 to 32, which is performed in a living cell.

**34.** Method of any of the claims 27 to 33, wherein the first, the second, or/and the at least one further receptor is a nucleic acid, in particular an oligonucleotide.

**35.** Method of any of the claims 27 to 34, wherein expression of a multiplicity of predetermined target genes is analysed.

| | **European Patent Office** | **EUROPEAN SEARCH REPORT** | Application Number EP 06 02 6700 |
|---|---|---|---|

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | SHAV-TAL Y: SOFT MATTER, vol. 2, 28 February 2006 (2006-02-28), pages 361-370, XP002442476 | 1,7, 11-18, 24,27-35 | INV. C12Q1/68 G01N21/64 |
| Y | * the whole document * | 2-6, 8-10, 19-23, 25,26 | |
| Y | US 2004/142386 A1 (RIGLER RUDOLF [DE] ET AL) 22 July 2004 (2004-07-22)<br><br>* paragraphs [0300] - [0321] * | 2-6, 8-10, 19-23, 25,26 | |
| A | SCHWILLE P ET AL: "MOLECULAR DYNAMICS IN LIVING CELLS OBSERVED BY FLUORESCENCE CORRELATION SPECTROSCOPY WITH ONE- AND TWO-PHOTON EXCITATION" BIOPHYSICAL JOURNAL, NEW YORK, US, US, vol. 77, October 1999 (1999-10), pages 2251-2265, XP001057386 ISSN: 0006-3495 * the whole document * | 1-35 | |
| A | WINTER H ET AL: "DIRECT GENE EXPRESSION ANALYSIS" CURRENT PHARMACEUTICAL BIOTECHNOLOGY, BENTHAM SCIENCE PUBLISHERS, BOCA RATON,FL, US, vol. 5, no. 2, April 2004 (2004-04), pages 191-197, XP001184007 ISSN: 1389-2010 * the whole document * | 1-35 | **TECHNICAL FIELDS SEARCHED (IPC)**<br>C12Q<br>G01J<br>G01N |
| A | WO 2005/040771 A (UNIV SINGAPORE [SG]; WOHLAND THORSTEN [SG]; HWANG LING CHIN [SG]) 6 May 2005 (2005-05-06) * abstract * | 1-35 | |

The present search report has been drawn up for all claims

| Place of search | Date of completion of the search | Examiner |
|---|---|---|
| Munich | 13 July 2007 | CROUCHER, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 1 935 987 A1**

## ANNEX TO THE EUROPEAN SEARCH REPORT
## ON EUROPEAN PATENT APPLICATION NO.

EP 06 02 6700

This annex lists the patent family members relating to the patent documents cited in the above-mentioned European search report.
The members are as contained in the European Patent Office EDP file on
The European Patent Office is in no way liable for these particulars which are merely given for the purpose of information.

13-07-2007

| Patent document cited in search report | Publication date | Patent family member(s) | Publication date |
|---|---|---|---|
| US 2004142386 A1 | 22-07-2004 | NONE | |
| WO 2005040771 A | 06-05-2005 | NONE | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 0679251 B1
- WO 02097406 A1
- WO 02097406 A

### Non-patent literature cited in the description

- **RIGLER, R ; ELSON, E.S.** Fluorescence Correlation Spectroscopy, Theory and Applicatons. Springer-Verlag, 2001
- **A. AMEDIEK ; E. HAUSTIEN ; D. SCHERFELD ; P. SCHWILLE.** Scanning dual-color cross-correlation analysis for dynamic co-localization studies of immobile molecules. *Signal Mol.,* 2002, vol. 3 (54), 201-210
- **ARAGON S. R ; PECORA R.** Fluorescence correlation spectroscopy as a probe of molecular dynamics. *J. Chem Phys,* 1976, vol. 64, 1791-1803
- **K. M. BERLAND ; P. T. C. SO ; Y. CHEN ; W. MANTULIN ; E. GRATTON.** Scanning two-photon fluctuation correlation spectroscopy: Particle counting measurements for detection of molecular aggregation. *Biophys J,* 1996, vol. 71, 410-420
- **A. CAMACHO ; K. KORN ; M. DAMOND ; J.-F. CAJOT ; E. LITBORN ; B. LIAO ; P. THYBERG ; H. WINTER ; A. HONEGGER ; P. GARDELLIN.** Direct Quantification of mRNA Expression Levels using Single Molecule Detection. *Journal of Biotechnology,* 2004, vol. 107, 1076-114
- **P. KASK ; K. PALO ; N. FAY ; L. BRAND ; Ü. METS ; D. ULLMANN ; J. JUNGMANN ; J. PSCHORR ; K. GALL.** Two-dimensional fluorescence intensity distribution analysis: theory and applications. *Biophys. J.,* 2000, vol. 78, 1703-1713
- **K. KORN ; P. GARDELLIN ; B. LIAO ; M. AMACKER ; Å. BERGSTRÖM ; H. BJÖRKMAN ; A. CAMACHO ; S. DÖRHÖFER ; K. DÖRRE ; J. ENSTRÖM.** Gene Expression Analysis using Single Molecule Detection. *Nucleic Acids Res. 2003,* 2003, vol. 31 (16), e89
- **J. C. LAGARIAS ; J. A. REEDS ; M. H. WRIGHT ; P. E. WRIGHT.** Convergence Properties of the Nelder-Mead Simplex Method in Low Dimensions. *SIAM Journal of Optimization,* 1998, vol. 9 (1), 112-147
- **D. MAGDE ; E. L. ELSON ; W. W. WEBB.** Thermodynamic fluctuations in a reacting system-measurement by fluorescence correlation spectroscopy. *Phys. Rev. Lett.,* 1972, vol. 29, 704-708
- **R. L. NOLAN ; H. CAI ; J. P. NOLAN ; P. M. GOODWIN.** A simple quenching method for fluorescence background reduction and its application to the direct, quantitative detection of specific mRNA. *Analytical Chemistry September 2003,* 2003
- **R. RIGLER ; Z. FÖLDES-PAPP ; F.-J. MEYER-ALMES ; C. SAMMET ; M. VÖLCKER ; A. SCHNETZ.** Fluorescence cross-correlation: A new concept for polymerase chain reaction. *Journal of Biotechnology,* 1998, vol. 97, 109
- **P. SCHWILLE ; F. J. MEYER-ALMES ; R. RIGLER.** Dual-color fluorescence cross-correlation spectroscopy for multicomponent diffusional analysis in solution. *Biophys. J.,* 1997, vol. 72, 1878-1886
- **MARRAS S. A. E ; KRAMER, F.R ; TYAGI, S.** Efficiencies of fluorescence resonance energy transfer and contact-mediated quenching in oligonucleotide probes. *Nucleic Acids Research,* 2002, vol. 30, e122